(19) Europäisches Patentamt
European Patent Office
Office européen des brevets

(11) **EP 4 310 734 A1**

(12) **EUROPEAN PATENT APPLICATION**
published in accordance with Art. 153(4) EPC

(43) Date of publication:
**24.01.2024  Bulletin 2024/04**

(21) Application number: **21931445.7**

(22) Date of filing: **15.03.2021**

(51) International Patent Classification (IPC):
**G06N 3/08** *(2023.01)*        **G06N 20/00** *(2019.01)*

(52) Cooperative Patent Classification (CPC):
**G06N 3/08; G06N 20/00**

(86) International application number:
**PCT/JP2021/010452**

(87) International publication number:
**WO 2022/195691 (22.09.2022 Gazette 2022/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventors:
• **OBINATA, Yuya**
  **Kawasaki-shi, Kanagawa 211-8588 (JP)**
• **YAMAMOTO, Takuma**
  **Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING DEVICE, INFORMATION PROCESSING METHOD, AND INFORMATION PROCESSING PROGRAM**

(57)    A storage unit (11) stores a plurality of pieces of labeled data in which a label that represents a correct answer is associated with object data, a plurality of pieces of unlabeled data that is object data not associated with a correct answer, and a deep learning model (110). A pseudo label generation unit (12) generates a pseudo label based on the unlabeled data and the deep learning model. A loss calculation unit (14) calculates a loss in a case where the unlabeled data is identified and in a case where the labeled data is identified by using the deep learning model (110) based on the pseudo label and the label included in the labeled data. An update unit (15) updates the deep learning model (110) based on the loss calculated by the loss calculation unit (14).

FIG. 1

EP 4 310 734 A1

**Description**

FIELD

The present disclosure relates to an information processing device, an information processing method, and an information processing program.

BACKGROUND

In recent years, with progress of a deep learning field, deep learning models with high recognition performance have appeared. In training of the deep learning model, the training may be efficiently advanced by using a large amount of labeled data that is data manually assigned with correct answers. For example, in a field of image recognition, in a case where an object is recognized, at least several hundreds of pieces of labeled data are used for one object.

On the other hand, most pieces of training data provided in an environment in which the training data is actually acquired is unlabeled data assigned with no correct answer, and the number of pieces of labeled data is small. For example, in a case where there are several hundreds of pieces of training data in total, there are often only about several tens of pieces of labeled data among the several hundreds of pieces of training data. In a case where the number of pieces of labeled data is small, the deep learning model overfits data used for training, and performance for data not used for training is degraded. Such an event is referred to as overfitting. Therefore, there is a need for a method of training a deep learning model with high recognition performance using unlabeled data as well.

Conventionally, the following technologies have been provided in deep learning. One is a technology of acquiring a feature extraction capability that is a capability of extracting an image feature used for recognition from unlabeled data. Specifically, a feature amount is extracted from unlabeled data by using a deep learning model, pieces of data are grouped together and divided into a plurality of clusters based on the extracted feature amount, and a pseudo label that is a pseudo correct answer is assigned to each cluster to perform training, thereby acquiring a feature amount extraction capability.

The other one is a technology of giving a feature extraction capability acquired in advance to a deep learning model, and then performing training with labeled data limited to a capability of identifying data based on an extracted feature. This technology is referred to as transfer learning.

Additionally, a method is conceivable in which the two technologies described above are combined, and training is performed with labeled data limited to a capability of identifying data based on an extracted feature based on a feature extraction capability acquired from unlabeled data. With this configuration, a deep learning model with high recognition performance may be acquired even with a small amount of labeled data.

SUMMARY

TECHNICAL PROBLEM

However, in a case where the training is performed limited to the capability of identifying the data based on the extracted feature after the acquisition of the feature extraction capability from the unlabeled data, each of the feature extraction capability and the identification capability of the deep learning model is individually trained and optimized. In other words, the feature amount extraction capability is optimized by the acquisition of the feature extraction capability from the unlabeled data, and the identification capability is optimized by the training limited to the capability of identifying the data based on the extracted feature. Thus, in a case where each processing is sequentially performed, it is difficult to tune the feature amount extraction capability according to the identification capability, resulting in a local optimal solution. Therefore, performance of the deep learning model in the entire recognition is lowered.

The disclosed technology has been made in view of the above, and an object thereof is to provide an information processing device, an information processing method, and an information processing program that improve recognition performance of a deep learning model.

SOLUTION TO PROBLEM

In an information processing device, an information processing method, and an information processing program disclosed in the present application, in one aspect, a storage unit stores a plurality of pieces of labeled data in which a label that represents a correct answer is associated with object data, a plurality of pieces of unlabeled data that is object data not associated with a correct answer, and a deep learning model. A pseudo label generation unit generates a pseudo label based on the unlabeled data and the deep learning model. A loss calculation unit calculates a loss in a case where the unlabeled data is identified and in a case where the labeled data is identified by using the deep learning model based on the pseudo label and the label included in the labeled data. An update unit updates the deep learning model based on the loss calculated by the loss calculation unit.

ADVANTAGEOUS EFFECTS OF INVENTION

According to one aspect of an information processing device, an information processing method, and an information processing program disclosed in the present application, recognition performance of a deep learning model may be improved.

BRIEF DESCRIPTION OF DRAWINGS

FIG. 1 is a block diagram of a training device according to a first embodiment.
FIG. 2 is a diagram for describing a training method according to the first embodiment.
FIG. 3 is a flowchart of entire training processing according to the first embodiment.
FIG. 4 is a flowchart of simultaneous training using labeled data and unlabeled data.
FIG. 5 is a block diagram of a training device according to a second embodiment.
FIG. 6 is a diagram for describing a training method according to the second embodiment.
FIG. 7 is a diagram illustrating an example of training data used in a third embodiment.
FIG. 8 is a diagram illustrating an example of a hardware configuration of a training device.

DESCRIPTION OF EMBODIMENTS

Hereinafter, embodiments of an information processing device, an information processing method, and an information processing program disclosed in the present application will be described in detail with reference to the drawings. Note that the following embodiments do not limit the information processing device, the information processing method, and the information processing program disclosed in the present application.

[First Embodiment]

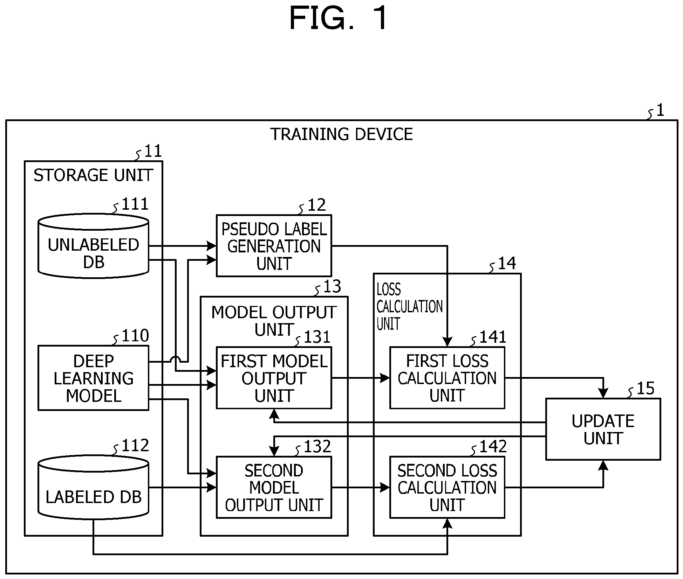

FIG. 1 is a block diagram of a training device according to a first embodiment. A training device 1, which is an information processing device according to the present embodiment, performs training of a deep learning model 110 that recognizes image data. Here, specifically, the image data is data represented as a set of red green blue (RGB) values in each pixel displayed in a screen. As illustrated in FIG. 1, the training device 1 includes a storage unit 11, a pseudo label generation unit 12, a model output unit 13, a loss calculation unit 14, and an update unit 15.
The storage unit 11 stores the deep learning model 110, an unlabeled data base (DB) 111, and a labeled DB 112.
The deep learning model 110 is, in the present embodiment, a learning model that performs image recognition. The deep learning model 110 includes a feature amount extraction layer that extracts a feature of image data and an identification layer that identifies an object appearing in the image data from a feature amount of the image data.
The unlabeled DB 111 is a database that stores unlabeled data 201 which is image data. The unlabeled DB 111 stores the unlabeled data 201 input from a user by using an external terminal device or the like. The unlabeled data 201 is training data to which a correct answer label indicating what an object appearing in the image data is is not assigned.
The labeled DB 112 is a database that stores labeled data 202 which is image data. The labeled DB 112 stores the labeled data 202 input from a user by using an external terminal device or the like. The labeled data 202 is training data assigned with a correct answer label.
The pseudo label generation unit 12 acquires the deep learning model 110 stored in the storage unit 11. Furthermore, the pseudo label generation unit 12 reads a plurality of pieces of the unlabeled data 201 from the unlabeled DB 111. At this time, the pseudo label generation unit 12 preferably reads all pieces of the unlabeled data 201. Next, the pseudo label generation unit 12 inputs each piece of the unlabeled data 201 included in the read image group to the deep learning model 110, and acquires output corresponding to each piece of the unlabeled data 201.
Next, the pseudo label generation unit 12 groups the respective pieces of the unlabeled data 201 included in the read image group according to output values from the deep learning model 110, and divides the grouped pieces of the unlabeled data 201 into a predetermined number of clusters determined in advance. For example, the pseudo label generation unit 12 performs the clustering by using k-means clustering.
Then, the pseudo label generation unit 12 assigns a pseudo label that is a pseudo correct answer to each cluster. For example, in a case where there are k classes, the pseudo label generation unit 12 assigns the pseudo labels such as a class #1, a class #2, a class #3, ..., and a class #k. Thereafter, the pseudo label generation unit 12 outputs the pseudo label assigned to each cluster together with information regarding the unlabeled data 201 included in each cluster to the loss calculation unit 14.

The model output unit 13 acquires output from the deep learning model 110 of each of the unlabeled data 201 and the labeled data 202. The model output unit 13 includes a first model output unit 131 and a second model output unit 132.

Furthermore, the loss calculation unit 14 compares an output value from the deep learning model 110 with a pseudo label or a label assigned to the labeled data 202, and calculates each loss. The loss calculation unit 14 includes a first loss calculation unit 141 and a second loss calculation unit 142. Hereinafter, operation of the model output unit 13 and the loss calculation unit 14 will be described in detail.

The first model output unit 131 acquires the deep learning model 110 stored in the storage unit 11. Furthermore, the first model output unit 131 reads a plurality of pieces of the unlabeled data 201 used for training of the deep learning model 110 from the unlabeled DB 111.

Next, the first model output unit 131 inputs each piece of the unlabeled data 201 included in the read image group to the feature amount extraction layer of the deep learning model 110, and obtains output from the deep learning model 110 corresponding to each piece of the unlabeled data 201. For example, in a case where the read image group is $D_u$ and the unlabeled data 201 included in $D_u$ is $x_u$, the first model output unit 131 acquires $y_u$, which is the output of the deep learning model 110, by using the following Expression (1).

[Expression 1]

$$y_u = h_{unsup}\left(f(x_u)\right) \qquad \cdots (1)$$

Here, f represents the feature amount extraction layer of the deep learning model 110. In other words, $f(x_u)$ represents output from the feature amount extraction layer. Furthermore, $h_{unsup}$ represents an identification layer for unlabeled data of the deep learning model 110. In other words, $h_{unsup}(f(x_u))$ is output obtained by inputting the output from the feature amount extraction layer to the identification layer.

Thereafter, the first model output unit 131 outputs an output value of the deep learning model 110 for each piece of the unlabeled data 201 to the first loss calculation unit 141 of the loss calculation unit 14. For example, the first model output unit 131 outputs $y_u$, which is the output of the deep learning model 110, to the first loss calculation unit 141.

The first loss calculation unit 141 calculates a loss in a case where the unlabeled data 201 is used. Hereinafter, the loss may be referred to as Loss.

The first loss calculation unit 141 receives input of the output value from the deep learning model 110 for the unlabeled data 201 from the first model output unit 131. Moreover, the first loss calculation unit 141 receives, from the pseudo label generation unit 12, input of a pseudo label for each cluster created by clustering the unlabeled data 201 together with the information regarding the unlabeled data 201 included in each cluster.

Next, the first loss calculation unit 141 compares the acquired output value with the pseudo label, and calculates a Loss in a case where the unlabeled data 201 is used, which is an error between an estimation result using the deep learning model 110 and the pseudo label that is a correct answer here. For example, the first loss calculation unit 141 calculates Loss$L_{unsup}$ which is the Loss in a case where the unlabeled data 201 is used by using the following Expression (2) for $y_u$ representing the acquired output value.

[Expression 2]

$$L_{unsup} = \sum_{x_u \in D_u} CE(y_u, t_u) = \sum_{x_u \in D_u} CE(h_{unsup}\left(f(x_u)\right), t_u) \qquad \cdots (2)$$

Here, $t_u$ is the pseudo label. Furthermore, CE represents a general cross-entropy loss.

Thereafter, the first loss calculation unit 141 outputs the calculated loss in a case where the unlabeled data 201 is used to the update unit 15. For example, the first loss calculation unit 141 outputs the calculated $L_{unsup}$ to the update unit 15.

The second model output unit 132 acquires the deep learning model 110 stored in the storage unit 11. Furthermore, the second model output unit 132 reads the labeled data 202 used for training of the deep learning model 110 from the labeled DB 112.

Next, the second model output unit 132 inputs each piece of the labeled data 202 included in the read image group to the feature amount extraction layer of the deep learning model 110, and obtains output from the deep learning model 110 corresponding to each piece of the labeled data 202. For example, in a case where the read image group is $D_i$ and the labeled data 202 included in $D_i$ is $x_i$, the second model output unit 132 acquires $y_i$, which is the output of the deep learning model 110, by using the following Expression (3).
[Expression 3]

$$y_i = h_{sup}\left(f(x_i)\right) \qquad \cdots (3)$$

Here, f represents the feature amount extraction layer of the deep learning model 110. In other words, $f(x_i)$ represents output from the feature amount extraction layer. Furthermore, $h_{sup}$ represents an identification layer for labeled data of the deep learning model 110. In other words, $h_{sup}(f(x_i))$ is output obtained by inputting the output from the feature amount extraction layer to the identification layer. As described above, in the training device 1 according to the present embodiment, training is individually performed on each of the identification layer for the unlabeled data 201 and the identification layer for the labeled data 202.

Thereafter, the second model output unit 132 outputs an output value of the deep learning model 110 for each piece of the labeled data 202 to the second loss calculation unit 142. For example, the second model output unit 132 outputs $y_i$, which is the output of the deep learning model 110, to the second loss calculation unit 142.

The second loss calculation unit 142 receives input of the output value from the deep learning model 110 for the labeled data 202 from the second model output unit 132. Moreover, the second loss calculation unit 142 acquires a label assigned to each piece of the labeled data 202 read by the model output unit 13 from the labeled DB 112.

Next, the second loss calculation unit 142 compares the acquired output value with the label assigned to each piece of the labeled data 202, and calculates a Loss in a case where the labeled data 202 is used, which is an error between an estimation result using the deep learning model 110 and the label that is a correct answer. For example, the second loss calculation unit 142 calculates $L_{sup}$ which is the Loss in a case where the labeled data 202 is used by using the following Expression (4) for $y_i$ representing the acquired output value.
[Expression 4]

$$L_{sup} = \sum_{x_i \in D_i} CE(y_i, t_i) = \sum_{x_i \in D_i} CE(h_{sup}\left(f(x_i)\right), t_i) \qquad \cdots (4)$$

Here, $t_i$ is the correct answer. Furthermore, CE represents a general cross-entropy loss.

Thereafter, the second loss calculation unit 142 outputs the calculated loss in a case where the labeled data 202 is used to the update unit 15. For example, the second loss calculation unit 142 outputs the calculated $L_{sup}$ to the update unit 15.

The update unit 15 receives input of the loss in a case where the unlabeled data 201 is used from the first loss calculation unit 141. Furthermore, the update unit 15 receives input of the loss in a case where the labeled data 202 is used from the second loss calculation unit 142. Then, the update unit 15 calculates a final loss by performing weighting determined in advance on the estimation result in a case where the unlabeled data 201 is used and the estimation result in a case where the labeled data 202 is used. For example, the update unit 15 calculates $L_{total}$ which is the final Loss by using the following Expression (5) from $L_{unsup}$ which is the Loss in a case where the unlabeled data 201 is used and $L_{sup}$ which is the Loss in a case where the labeled data 202 is used.
[Expression 5]

$$L_{total} = \alpha * L_{sup} + (1 - \alpha) * L_{unsup} \qquad \cdots (5)$$

Here, a is a parameter for balance adjustment between $L_{sup}$ and $L_{unsup}$, and is a constant for weighting each. $\alpha$ takes a value greater than 0 and smaller than 1. As $\alpha$ increases, an influence on training by the estimation result in a case where the labeled data 202 is used increases.

Thereafter, the update unit 15 obtains a parameter of the feature amount extraction layer of the deep learning model 110, a parameter of the identification layer for the unlabeled data 201, and a parameter of the identification layer for the labeled data 202 such that the calculated final loss is minimized. Then, the update unit 15 updates the deep learning model 110 held by the model output unit 13 with the obtained parameter of the feature amount extraction layer of the deep learning model 110 and the obtained parameter of the identification layer for the unlabeled data 201. Furthermore, the update unit 15 updates the deep learning model 110 held by the model output unit 13 with the obtained parameter of the feature amount extraction layer of the deep learning model 110 and the obtained parameter of the identification layer for the labeled data 202. For example, the update unit 15 updates the model output unit 13 and the deep learning model 110 held by each model output unit 13 by f, $L_{sup}$, and $L_{unsup}$ that minimize $L_{total}$.

As described above, in the training device 1 according to the present embodiment, the deep learning model 110 for the unlabeled data 201 and the deep learning model 110 for the labeled data 202 are trained separately from each other and simultaneously in parallel. Note that the feature amount extraction layer is the same and the identification layer is different between the deep learning model 110 for the unlabeled data 201 and the deep learning model 110 for the labeled data 202. Then, in a recognition phase after the training, unknown image data is recognized by using the trained deep learning model 110 for the labeled data 202 held by the model output unit 13.

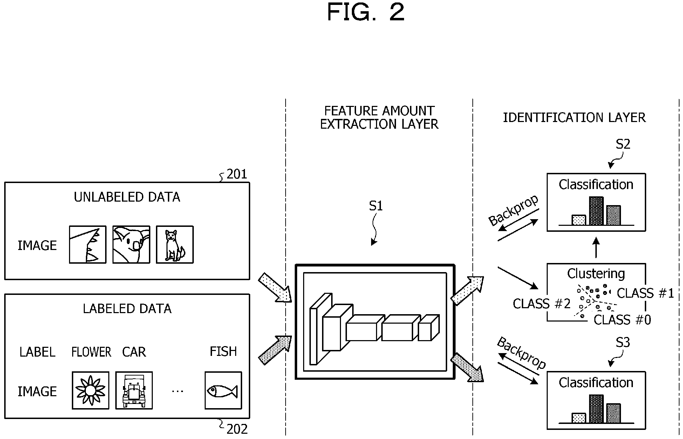

FIG. 2 is a diagram for describing a training method according to the first embodiment. Next, an overall flow of training in the present embodiment will be described with reference to FIG. 2.

First, a plurality of the unlabeled data 201 and a plurality of the labeled data 202 are prepared and stored in the unlabeled DB 111 and the labeled DB 112, respectively. As illustrated in FIG. 2, correct answers are not assigned to the unlabeled data, but labels such as a flower, a car, and a fish are assigned to the labeled data 202.

Next, for each piece of the unlabeled data 201 and the labeled data 202, feature amount extraction is performed by the first model output unit 131 and the second model output unit 132 by using the feature amount extraction layer of the deep learning model 110 (Step S1).

Next, the training using the unlabeled data 201 proceeds in a direction of an arrow on an upper side of a paper surface from the feature amount extraction layer toward the identification layer in FIG. 2. Then, classification by clustering and addition of pseudo labels are performed by the pseudo label generation unit 12. Thereafter, by the first loss calculation unit 141, the second loss calculation unit 142, and the update unit 15, training with the unlabeled data 201 using the pseudo labels and training with the labeled data 202 using the labels are simultaneously performed (Steps S2 and S3). By this training, the feature amount extraction layer of the deep learning model 110, the identification layer for the unlabeled data 201, and the identification layer for the labeled data 202 are simultaneously trained.

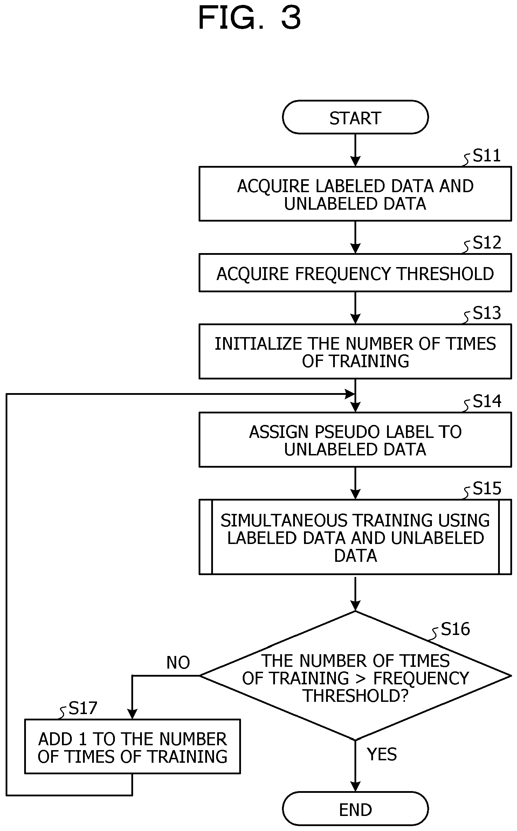

FIG. 3 is a flowchart of entire training processing according to the first embodiment. Next, a flow of the entire training processing according to the first embodiment will be described with reference to FIG. 3.

The training device 1 acquires the unlabeled data 201 and stores the acquired unlabeled data 201 in the unlabeled DB 111. Furthermore, the training device 1 acquires the labeled data 202 and stores the acquired labeled data 202 in the labeled DB 112 (Step S11).

The update unit 15 acquires a frequency threshold input from an external terminal device or the like (Step S12).

Next, the update unit 15 initializes and sets the number of times of training to 0 (Step S13).

The pseudo label generation unit 12 reads a plurality of pieces of the unlabeled data 201 from the unlabeled DB 111 to perform classification, generates a pseudo label for each class, and assigns the pseudo label to each class (Step S14).

The first model output unit 131 and the second model output unit 132, the first loss calculation unit 141 and the second loss calculation unit 142, and the update unit 15 execute simultaneous training using the labeled data 202 and the unlabeled data 201 (Step S15).

Thereafter, the update unit 15 determines whether or not the number of times of training exceeds the frequency threshold (Step S16). In a case where the number of times of training is equal to or less than the frequency threshold (Step S16: No), the update unit 15 adds 1 to the number of times of training and increments the number of times of training (Step S17). Thereafter, the training processing returns to Step S14.

On the other hand, in a case where the number of times of training exceeds the frequency threshold (Step S16: Yes), the update unit 15 ends the training processing in the training device 1.

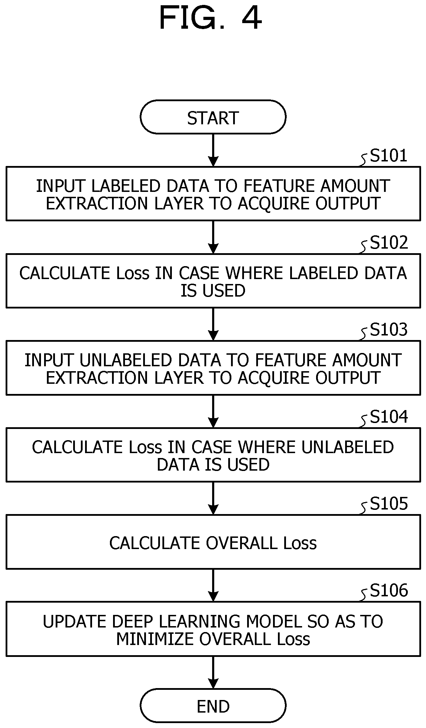

FIG. 4 is a flowchart of the simultaneous training using the labeled data and the unlabeled data. Next, a flow of the simultaneous training using the labeled data and the unlabeled data will be described with reference to FIG. 4. Each processing illustrated in FIG. 4 corresponds to an example of the processing executed in Step S15 in FIG. 3.

The second model output unit 132 reads a plurality of pieces of the labeled data 202 from the labeled DB 112. Then, the second model output unit 132 inputs each piece of the read labeled data 202 to the feature amount extraction layer of the deep learning model 110. Thereafter, the second model output unit 132 acquires output from the deep learning model 110 (Step S101).

The second loss calculation unit 142 acquires a label assigned to the labeled data 202 read by the second model output unit 132 from the labeled DB 112. Then, the second loss calculation unit 142 compares an output value corresponding to each piece of the labeled data 202 acquired from the second model output unit 132 with the label assigned to the labeled data 202, and calculates a Loss in a case where the labeled data 202 is used (Step S102).

The first model output unit 131 reads a plurality of pieces of the unlabeled data 201 from the unlabeled DB 111. Then, the first model output unit 131 inputs each piece of the read unlabeled data 201 to the feature amount extraction layer of the deep learning model 110. Thereafter, the first model output unit 131 acquires output from the deep learning model 110 (Step S103).

The first loss calculation unit 141 compares an output value corresponding to each piece of the unlabeled data 201 acquired from the first model output unit 131 with a pseudo label acquired from the pseudo label generation unit 12, and calculates a Loss in a case where the unlabeled data 201 is used (Step S104).

The update unit 15 acquires the Loss in a case where the labeled data 202 is used from the second loss calculation unit 142. Furthermore, the update unit 15 acquires the Loss in a case where the unlabeled data 201 is used from the first loss calculation unit 141. Then, the update unit 15 calculates an overall Loss by using the respective weights for the Loss in a case where the labeled data 202 is used and the Loss in a case where the unlabeled data 201 is used (Step S105).

Thereafter, the update unit 15 updates the deep learning model 110 included in each of the first model output unit 131 and the second model output unit 132 so as to minimize the overall Loss (Step S106).

As described above, the training device according to the present embodiment divides the unlabeled data into the plurality of clusters, assigns the pseudo labels to the respective clusters, and executes the training of the deep learning model by using the labeled data, the unlabeled data, and the pseudo labels. With this configuration, the training device may simultaneously train the feature amount extraction layer and the identification layer of the deep learning model by using both the labeled data and the unlabeled data. Therefore, even in a case where the training is performed by using a large number of pieces of the unlabeled data and a small number of pieces of the labeled data, optimal recognition performance may be acquired, and the recognition performance of the deep learning model may be improved.

[Second Embodiment]

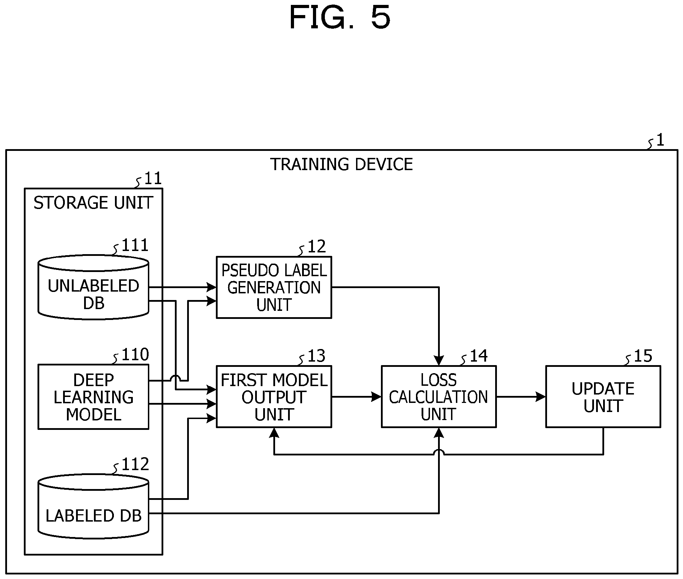

FIG. 5 is a block diagram of a training device according to a second embodiment. A training device 1 according to the present embodiment is different from that of the first embodiment in performing training with a single task using one identification layer. In the following description, description of functions of the respective units similar to those of the first embodiment will be omitted.

In the training device 1 according to the present embodiment, the number of labels represented by labeled data 202 is equal to the number of clusters in a case where unlabeled data is clustered. In other words, in the training device 1 according to the present embodiment, in a case where the number of labels represented by the labeled data 202 is $t_u$ and unlabeled data 201 is classified into $t_i$ clusters, $t_u = t_i$ is satisfied.

A pseudo label generation unit 12 performs clustering in a manner similar to that of the first embodiment by using the unlabeled data 201, and divides the unlabeled data 201 into a plurality of clusters. At this time, the pseudo label generation unit 12 classifies the unlabeled data 201 into clusters as many as the number of labels represented by the labeled data 202. Then, the pseudo label generation unit 12 assigns pseudo labels to the respective clusters. Thereafter, the pseudo label generation unit 12 outputs the generated pseudo labels to a loss calculation unit 14.

A model output unit 13 reads a plurality of pieces of the unlabeled data 201 from an unlabeled DB 111. Furthermore, the model output unit 13 reads a plurality of pieces of the labeled data 202 from a labeled DB 112. Then, the model output unit 13 integrates the read unlabeled data 201 and the read labeled data 202 into integrated data. Then, the model output unit 13 inputs the integrated data to a deep learning model 110 and acquires output.

For example, in a case where the integrated data is x, the model output unit 13 acquires y that is the output from the deep learning model 110 represented by the following Expression (6).

[Expression 6]

$$y = h\left(f\left(x\right)\right) \qquad \cdots (6)$$

Here, f represents a feature amount extraction layer of the deep learning model 110. In other words, f(x) is output from the feature amount extraction layer. h represents an identification layer of the deep learning model 110. In other words, h(f(x)) is output obtained by inputting an output value from the feature amount extraction layer to the identification layer.

Thereafter, the model output unit 13 outputs an output value for each piece of the integrated data to the loss calculation unit 14.

The loss calculation unit 14 receives input of the output value from the deep learning model 110 for each piece of the integrated data from the model output unit 13. Furthermore, the loss calculation unit 14 acquires a label representing each piece of the labeled data 202 stored in the labeled DB 112 from the labeled DB 112. Furthermore, the loss calculation unit 14 receives input of a pseudo label for each class from the pseudo label generation unit 12.

Next, the loss calculation unit 14 integrates the label acquired from the labeled DB 112 and the pseudo label to generate an integrated label. For example, since the number of labels and the number of pseudo labels acquired from the labeled DB 112 are the same, the loss calculation unit 14 generates the integrated label by replacing each of the pseudo labels with a label determined to refer to the same object.

Thereafter, the loss calculation unit 14 compares the output value from the feature amount extraction layer of the deep learning model 110 for each piece of the integrated data with the integrated label corresponding to each piece of the integrated data, and calculates a loss in a case where the integrated data is used.

For example, in a case where a set including all x that is the integrated data is D and the integrated label is t, the loss calculation unit 14 calculates L that is the Loss in a case where the integrated data is used, by using the following Expression (7). Here, CE is a general cross-entropy loss.

[Expression 7]

$$L = \sum_{x \in D} CE(y, t) = \sum_{x \in D} CE(h\left(f\left(x\right)\right), t) \qquad \cdots (7)$$

Thereafter, the loss calculation unit 14 outputs the calculated loss to an update unit 15. For example, the loss calculation unit 14 outputs L, which is the Loss in a case where the integrated data is used, calculated by using Expression (7) to the update unit 15.

The update unit 15 receives input of the loss from the loss calculation unit 14. Then, the update unit 15 determines a parameter of the deep learning model 110 that minimizes the loss. Thereafter, the update unit 15 updates the deep learning model 110 included in the model output unit 13 by using the determined parameter.

For example, in a case where L that is the Loss in a case where the integrated data is used is acquired from the loss calculation unit 14, the update unit 15 updates f that is the feature amount extraction layer and h that is the identification layer so as to minimize L. In other words, in the present embodiment, training is performed by using one deep learning model 110 having a similar feature amount extraction layer and identification layer for both the unlabeled data 201 and the labeled data 202.

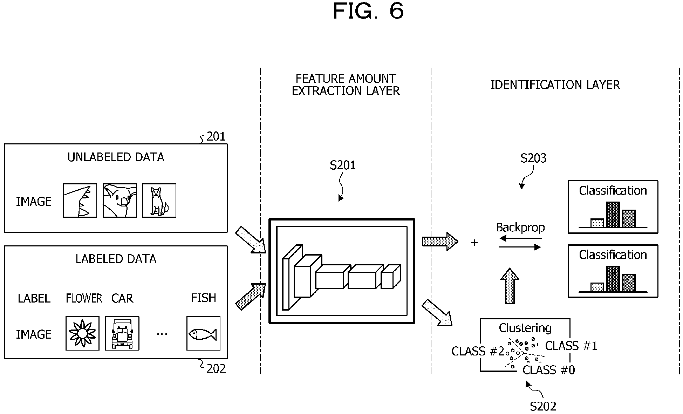

FIG. 6 is a diagram for describing a training method according to the second embodiment. The training device 1 according to the present embodiment will be described in detail with reference to FIG. 6.

The model output unit 13 reads the unlabeled data 201 and the labeled data 202 to generate integrated data. Next, the model output unit 13 inputs the integrated data to the deep learning model 110, and acquires output from the deep learning model 110 corresponding to each piece of the integrated data (Step S201).

The pseudo label generation unit 12 performs clustering in a manner similar to that of the first embodiment by using the unlabeled data 201, and divides the unlabeled data 201 into clusters as many as the number of labels representing the labeled data 202 stored in the labeled DB 112. Then, the pseudo label generation unit 12 assigns pseudo labels to the respective clusters (Step S202).

The loss calculation unit 14 integrates the pseudo label and the label representing the labeled data 202 stored in the labeled DB 112 to generate an integrated label. Then, the loss calculation unit 14 compares an output value corresponding to each piece of the integrated data with the integrated label to calculate a loss. The update unit 15 performs training by updating the feature amount extraction layer and the identification layer of the deep learning model 110 included in the model output unit 13 so as to minimize the loss calculated by the loss calculation unit 14 (Step S203).

As described above, the training device according to the present embodiment classifies the unlabeled data into the clusters as many as the number of labels representing the labeled data. Then, the training device generates the integrated data obtained by integrating the labeled data and the unlabeled data, generates the integrated label by integrating the label of the labeled data and the pseudo label, and performs the training by using the integrated data and the integrated label. With this configuration, the deep learning model may be trained by training of a single task by using a single identification layer. Also in this method, even in a case where the training is performed by using a large number of pieces of the unlabeled data and a small number of pieces of the labeled data, optimal recognition performance may be acquired, and the recognition performance of the deep learning model may be improved.

[Third Embodiment]

Next, a third embodiment will be described. In the first and second embodiments, the case where the image data is used as the training data has been described as an example, but it is possible to similarly perform training by using unlabeled data and labeled data even when data is other than the image data.

For example, a training device 1 may perform training of a deep learning model 110 by using a moving image as training data. The moving image is a set of RGB values according to a lapse of time in each pixel in a screen. In that case, it is possible to identify a type of an unknown moving image by using the trained deep learning model 110.

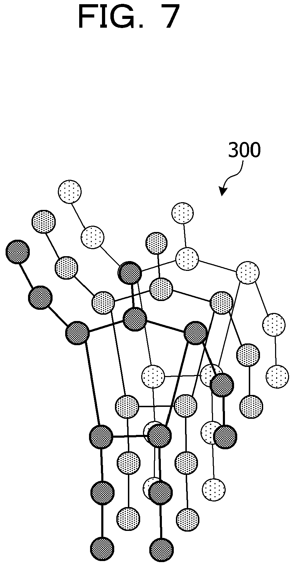

Besides, the training device 1 may also perform the training of the deep learning model 110 by using joint data as the training data. FIG. 7 is a diagram illustrating an example of the training data used in the third embodiment. The joint data is data representing spatial positions of joints of a human body such as a wrist and an elbow as represented by the respective points of an image 300 in FIG. 7. For example, in the case of a three-dimensional space, the joint data is data represented by xyz coordinates, and in the case of a two-dimensional plane, the joint data is data represented by xy coordinates. Moreover, in the case of joint data to which a human motion is added, sensor data such as information regarding acceleration at each point and information regarding a gyro sensor when a person moves is added. In that case, it is possible to identify what kind of motion the human motion is by using the trained deep learning model 110.

As described above, the training device according to each embodiment may perform the training of the deep learning model by using other data such as the moving image data and the joint data other than the image data. Additionally, even in a case where the other data other than the image data is used, by performing the training by using a large number of pieces of the unlabeled data and a small number of pieces of the labeled data, optimal recognition performance may be acquired, and the recognition performance of the deep learning model may be improved.

(Hardware Configuration)

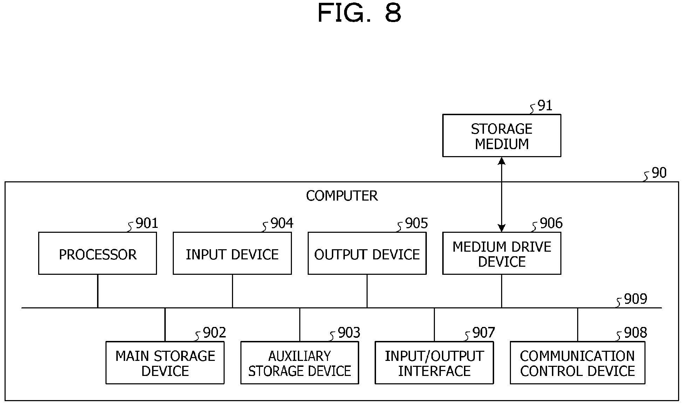

FIG. 8 is a diagram illustrating an example of a hardware configuration of the training device. The training device 1 illustrated in FIGs. 1 and 5 is implemented by a computer 90 in FIG. 8. The computer 90 is, for example, a server.

The computer 90 includes a processor 901, a main storage device 902, an auxiliary storage device 903, an input device 904, an output device 905, a medium drive device 906, an input/output interface 907, and a communication control device 908. The respective components of the computer 90 are coupled to each other by a bus 909.

The processor 901 is, for example, a central processing unit (CPU). The computer 90 may include a plurality of the processors 901. Moreover, the computer 90 may include a graphics processing unit (GPU) or the like as the processor 901. The processor 901 loads a program in the main storage device 902, and executes the program.

The main storage device 902 is, for example, a random access memory (RAM). The auxiliary storage device 903 is, for example, a nonvolatile storage device such as a hard disk drive (HDD) or a solid state drive (SSD). For example, the auxiliary storage device 903 implements the function of the storage unit 11 in FIGs. 1 and 5.

The input device 904 is, for example, a keyboard, a pointing device, or a combination thereof. The pointing device may be, for example, a mouse, a touch pad, or a touch screen. The output device 905 is a display, a speaker, or a combination thereof. The display may be a touch screen.

The input/output interface 907 is coupled to a peripheral component interconnect express (PCIe) device or the like, and transmits/receives data to/from the coupled device.

The communication control device 908 is, for example, a wired local area network (LAN) interface, a wireless LAN interface, or a combination thereof. The computer 90 is coupled to a network such as a wireless LAN or a wired LAN via the communication control device 908. Specifically, the communication control device 908 may be an external network interface card (NIC) or an on-board network interface controller.

A storage medium 91 is an optical disk such as a compact disc (CD) or a digital versatile disk (DVD), a semiconductor memory card such as a magneto-optical disk, a magnetic disk, or a flash memory, or the like. The medium drive device 906 is a device that writes and reads data to and from the inserted storage medium 91.

The program executed by the processor 901 may be installed in the auxiliary storage device 903 in advance. Alternatively, the program may be stored and provided in the storage medium 91, read by the medium drive device 906 from the storage medium 91, copied to the auxiliary storage device 903, and thereafter loaded in the main storage device 902. Alternatively, the program may be downloaded and installed from a program provider over the network to the computer 90 via the network and the communication control device 908.

For example, the processor 901 executes the program to implement the functions of the pseudo label generation unit 12, the model output unit 13, the loss calculation unit 14, and the update unit 15 exemplified in FIGs. 1 and 5.

CITATION LIST

NON-PATENT DOCUMENT

Non-Patent Document 1: Self-labelling via simultaneous clustering and representation learning, Yuki M. Asano, Christian Rupprecht, Andrea Vedaldi, ICLR2020, 20 August 2020

REFERENCE SIGNS LIST

1    Training device
11    Storage unit
12    Pseudo label generation unit
13    Model output unit
14    Loss calculation unit

15      Update unit
131     First model output unit
132     Second model output unit
141     First loss calculation unit
142     Second loss calculation unit

**Claims**

1.  An information processing device comprising:

    a storage unit that stores a plurality of pieces of labeled data in which a label that represents a correct answer is associated with object data, a plurality of pieces of unlabeled data that is object data not associated with a correct answer, and a deep learning model;
    a pseudo label generation unit that generates a pseudo label based on the plurality of pieces of unlabeled data and the deep learning model;
    a loss calculation unit that calculates, based on the pseudo label and each label included in the plurality of pieces of labeled data, a loss for a result obtained by identifying the plurality of pieces of unlabeled data through the deep learning model, and a loss for a result obtained by identifying the plurality of pieces of labeled data through the deep learning model; and
    an update unit that updates the deep learning model based on the losses calculated by the loss calculation unit.

2.  The information processing device according to claim 1, wherein

    the deep learning model includes a feature amount extraction layer and an identification layer,
    the information processing device further comprises:

    a first model output unit that acquires the deep learning model and holds the deep learning model as a first deep learning model, and inputs the unlabeled data to the first deep learning model to obtain a first output value; and
    a second model output unit that acquires the deep learning model and holds the deep learning model as a second deep learning model, and inputs the labeled data to the second deep learning model to obtain a second output value
    the loss calculation unit includes:

    a first loss calculation unit that calculates a first loss by using the first output value obtained by the first model output unit and the pseudo label; and
    a second loss calculation unit that calculates a second loss by using the second output value obtained by the second model output unit and the label, and
    the update unit performs first update to the first deep learning model and second update to the second deep learning model based on both the first loss and the second loss.

3.  The information processing device according to claim 2, wherein the update unit performs similar update for the feature amount extraction layer included in each of the first deep learning model and the second deep learning model as the first update and the second update, and performs different update for each of a first identification layer included in the first deep learning model and a second identification layer included in the second deep learning model.

4.  The information processing device according to claim 1, wherein the pseudo label generation unit classifies the plurality of pieces of unlabeled data into a predetermined number of clusters based on an output value obtained by inputting the plurality of pieces of unlabeled data to the deep learning model, and assigns the pseudo label to each of the clusters.

5.  The information processing device according to claim 1, further comprising

    a model output unit that integrates the unlabeled data and the labeled data to create integrated data, and inputs the integrated data to the deep learning model to obtain an output value,
    wherein the loss calculation unit generates an integrated label by integrating the label included in the labeled data and the pseudo label, and calculates the loss based on the output value obtained by the model output unit and the integrated label.

6. An information processing method for performing learning by using a plurality of pieces of labeled data in which a label that represents a correct answer is associated with object data, a plurality of pieces of unlabeled data that is object data not associated with a correct answer, and a deep learning model, the information processing method comprising:

generating a pseudo label, the generating of the pseudo label being perform by using the plurality of pieces of unlabeled data and the deep learning model;
calculating, based on the pseudo label and the label included in the labeled data, a loss for a condition in which the plurality of pieces of unlabeled data are identified by using the deep learning model, and a loss for a condition in which the plurality of pieces of labeled data are identified by using the deep learning model; and
updating the deep learning model based on the calculated losses.

7. An information processing program for causing a computer to perform learning processing by using a plurality of pieces of labeled data in which a label that represents a correct answer is associated with object data, a plurality of pieces of unlabeled data that is object data not associated with a correct answer, and a deep learning model, the learning processing comprising:

generating a pseudo label, the generating of the pseudo label being perform by using the plurality of pieces of unlabeled data and the deep learning model;
calculating, based on the pseudo label and the label included in the labeled data, a loss for a condition in which the plurality of pieces of unlabeled data are identified by using the deep learning model, and a loss for a condition in which the plurality of pieces of labeled data are identified by using the deep learning model; and
updating the deep learning model based on the calculated losses.

# FIG. 1

# FIG. 2

# FIG. 3

```
              ┌──────────────┐
              │    START     │
              └──────┬───────┘
                     │
                     ▼            ⌐S11
       ┌────────────────────────────┐
       │  ACQUIRE LABELED DATA AND   │
       │      UNLABELED DATA         │
       └────────────┬───────────────┘
                    │             ⌐S12
       ┌────────────────────────────┐
       │  ACQUIRE FREQUENCY THRESHOLD│
       └────────────┬───────────────┘
                    │             ⌐S13
       ┌────────────────────────────┐
       │  INITIALIZE THE NUMBER OF   │
       │      TIMES OF TRAINING      │
       └────────────┬───────────────┘
                    │             ⌐S14
       ┌────────────────────────────┐
       │    ASSIGN PSEUDO LABEL TO   │
       │       UNLABELED DATA        │
       └────────────┬───────────────┘
                    │             ⌐S15
       ┌────────────────────────────┐
       │  SIMULTANEOUS TRAINING USING│
       │  LABELED DATA AND UNLABELED │
       │            DATA             │
       └────────────┬───────────────┘
                    │
                    ▼             ⌐S16
            ◇ THE NUMBER OF TIMES ◇
    NO      OF TRAINING > FREQUENCY
   ◄────────       THRESHOLD?
   │
   │  ⌐S17                        │ YES
┌──────────────────┐             ▼
│ ADD 1 TO THE      │      ┌──────────────┐
│ NUMBER OF TIMES   │      │     END      │
│ OF TRAINING       │      └──────────────┘
└──────────────────┘
```

# FIG. 4

```
        ┌─────────────┐
        │    START    │
        └──────┬──────┘
               │                    ⌐S101
    ┌──────────▼──────────────────────────┐
    │  INPUT LABELED DATA TO FEATURE AMOUNT │
    │  EXTRACTION LAYER TO ACQUIRE OUTPUT   │
    └──────────┬──────────────────────────┘
               │                    ⌐S102
    ┌──────────▼──────────────────────────┐
    │ CALCULATE Loss IN CASE WHERE LABELED │
    │           DATA IS USED               │
    └──────────┬──────────────────────────┘
               │                    ⌐S103
    ┌──────────▼──────────────────────────┐
    │ INPUT UNLABELED DATA TO FEATURE AMOUNT│
    │  EXTRACTION LAYER TO ACQUIRE OUTPUT   │
    └──────────┬──────────────────────────┘
               │                    ⌐S104
    ┌──────────▼──────────────────────────┐
    │ CALCULATE Loss IN CASE WHERE UNLABELED│
    │           DATA IS USED               │
    └──────────┬──────────────────────────┘
               │                    ⌐S105
    ┌──────────▼──────────────────────────┐
    │       CALCULATE OVERALL Loss         │
    └──────────┬──────────────────────────┘
               │                    ⌐S106
    ┌──────────▼──────────────────────────┐
    │  UPDATE DEEP LEARNING MODEL SO AS TO  │
    │      MINIMIZE OVERALL Loss           │
    └──────────┬──────────────────────────┘
               │
        ┌──────▼──────┐
        │     END     │
        └─────────────┘
```

# FIG. 5

# FIG. 6

# FIG. 7

300

# FIG. 8

COMPUTER

- 91 STORAGE MEDIUM
- 90
- 901 PROCESSOR
- 904 INPUT DEVICE
- 905 OUTPUT DEVICE
- 906 MEDIUM DRIVE DEVICE
- 909
- 902 MAIN STORAGE DEVICE
- 903 AUXILIARY STORAGE DEVICE
- 907 INPUT/OUTPUT INTERFACE
- 908 COMMUNICATION CONTROL DEVICE

## INTERNATIONAL SEARCH REPORT

International application No.

PCT/JP2021/010452

### A. CLASSIFICATION OF SUBJECT MATTER
G06N 3/08(2006.01)i; G06N 20/00(2019.01)i
FI: G06N3/08; G06N20/00 130

According to International Patent Classification (IPC) or to both national classification and IPC

### B. FIELDS SEARCHED

Minimum documentation searched (classification system followed by classification symbols)
G06N3/00-99/00; G06T7/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
Science Direct; IEEE Xplore

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | LEE, Dong-Hyun. Pseudo-Label: The Simple and Efficient Semi-Supervised Learning Method for Deep Neural Networks. ICML 2013 Workshop : Challenges in Representation Learning (WREPL) [online]., 2013, [retrieval date 12 May 2021], internet:<URL:https://www.kaggle.com/blobs/download/forum-message-attachment-files/746/pseudo_label_final.pdf>, chapter 2 | 1, 5-7<br>4<br>2-3 |
| Y | XIN, Xiaomeng et al. Semi-supervised person re-identification using multi-view clustering. Pattern Recognition [online]., 19 November 2018, vol. 88, pp. 285-297, [retrieval date 10 May 2021], internet:<URL:https://www.sciencedirect.com/science article/pii/S0031320318304126> <DOI:10.1016/j.patcog.2018.11.025>, chapter 3.1 | 4 |

☒ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 May 2021 (12.05.2021) | 25 May 2021 (25.05.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
| --- |
| PCT/JP2021/010452 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | SAITO, Kuniaki et al. Asymmetric Tri-training for Unsupervised Domain Adaptation. arXiv. org [online]., 2017, arXiv:1702.08400v3, [retrieval date 12 May 2021], internet:<URL:https://arxiv.org/pdf/1702.08400v3.pdf>, chapter 3 | 2-3 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YUKI M. ASANO ; CHRISTIAN RUPPRECHT ; ANDREA VEDALDI.** Self-labelling via simultaneous clustering and representation learning. *ICLR2020,* 20 August 2020